# EUROPÄISCHE PATENTSCHRIFT

(11) **EP 4 615 731 B1**
(45) Veröffentlichungstag und Bekanntmachung des Hinweises auf die Patenterteilung: **26.11.2025**
(21) Anmeldenummer: 25702742.5
(22) Anmeldetag: 27.01.2025
(51) Int. Cl.: B60W 30/095, B60W 30/18, B60W 60/00, B60W 40/04

(54) **VERFAHREN ZUM PLANEN EINER SOLLTRAJEKTORIE FÜR EIN AUTOMATISIERT FAHRENDES FAHRZEUG**
METHOD FOR PLANNING A TARGET TRAJECTORY FOR AN AUTOMATED VEHICLE
PROCÉDÉ DE PLANIFICATION D'UNE TRAJECTOIRE CIBLE POUR UN VÉHICULE AUTOMATISÉ

(30) Priorität: 02.02.2024 DE 102024000349
(43) Veröffentlichungstag der Anmeldung: 17.09.2025
(73) Patentinhaber: Mercedes-Benz Group AG, 70372 Stuttgart (DE)
(72) Erfinder: Die Erfindernennung liegt noch nicht vor
(74) Vertreter: Novagraaf Group
(86) Internationale Anmeldenummer: PCT/EP2025/051937
(87) Internationale Veröffentlichungsnummer: WO 2025/162864

(56) Entgegenhaltungen:
- DE-A1- 102020 108 857
- US-A1- 2014 121 880
- US-A1- 2016 306 357
- US-A1- 2019 088 126

## Beschreibung

Die Erfindung betrifft ein Verfahren zum Planen einer Solltrajektorie für ein automatisiert fahrendes Fahrzeug gemäß dem Oberbegriff des Patentanspruchs 1.

Aus der nicht vorveröffentlichten DE 102023003013 A1 ist ein Verfahren zum Betreiben eines hochautomatisiert fahrenden Fahrzeugs auf einer mehrspurigen Straße bekannt. Dabei ist vorgesehen, dass detektiert wird, ob sich dem Fahrzeug auf einer Nachbarspur ein schnelles Fahrzeug von hinten nähert und wenn das der Fall ist, werden Lenkmanöver zur Verschiebung der Querposition des Fahrzeugs in Richtung der Nachbarspur unterdrückt.

Aus der nicht vorveröffentlichten DE102023004108 A1 ist ein Fahrerassistenzsystem für ein Fahrzeug bekannt, das ermittelt, ob sich das Fahrzeug auf einer mehrspurigen Straße in einer Stausituation befindet und ob sich zwischen dem Fahrzeug und den Fahrzeugen auf einer Nachbarspur eine Gasse befindet, die ausreichend breit ist, um einem Motorrad ein Vorbeifahren zu ermöglichen. Wenn eine derartige Gasse erkannt wird, wird eine Warnung über potenzielle Motorradfahrer an den Fahrer des Fahrzeugs ausgegeben und bei Erkennung eines die Gasse benutzenden Motorrads wird die Bewegung des Fahrzeugs derart geregelt, dass die Gasse aufrechterhalten wird.

Aus der DE 102020108857 A1 Technik ist ein Verfahren zur Trajektorienplanung für ein automatisiert fahrendes Fahrzeug bekannt. Dabei ist vorgesehen, dass eine Mehrzahl von möglichen Trajektorien als potenzielle Solltrajektorien erstellt werden. Eine mögliche Trajektorie enthält dabei sowohl die Koordinaten eines Pfads, den das Fahrzeug abfahren soll, als auch Informationen über die Dynamik, mit der dieser Pfad abgefahren werden soll. Die potenziellen Solltrajektorien werden in Abhängigkeit der momentanen Situation mittels eines Optimierungsalgorithmus gegeneinander priorisiert und die am höchsten priorisierte potentielle Solltrajektorie wird als tatsächliche Solltrajektorie ausgewählt und der Fahrzeugführung zugrunde gelegt.

Der Erfindung liegt die Aufgabe zugrunde, ein verbessertes Verfahren zum Planen einer Solltrajektorie für ein automatisiert fahrendes Fahrzeug anzugeben.

Die Aufgabe wird durch die Merkmale des Patentanspruchs 1 gelöst. Vorteilhafte Ausgestaltungen und Weiterbildungen ergeben sich aus den Unteransprüchen.

Erfindungsgemäß ist bei einem Verfahren zum Planen einer Solltrajektorie für ein automatisiert fahrendes Fahrzeug vorgesehen, dass die Solltrajektorie Koordinaten eines Pfads enthält, den das Fahrzeug abfahren soll, sowie Informationen über die Dynamik enthält, mit der der Pfad abgefahren werden soll, dass eine aktuelle Umgebungssituation mittels einer Umgebungserfassungseinheit des Fahrzeugs erfasst wird, dass das Planen mittels eines Optimierungsalgorithmus erfolgt, mit dem mehrere potentielle Solltrajektorien in Abhängigkeit der aktuellen Umgebungssituation gegeneinander priorisiert werden und mit dem die am höchsten priorisierte potentielle Solltrajektorie als Solltrajektorie auswählt wird. Weiterhin ist vorgesehen, dass mittels der Umgebungserfassungseinheit detektiert wird, ob sich auf einer Nachbarspur des Fahrzeugs eine Fahrzeugkolonne befindet, ob sich zwischen dem Fahrzeug und der Fahrzeugkolonne eine Fahrzeugzwischengasse befindet, die ausreichend breit ist, um einem Motorrad ein Vorbeifahren zu ermöglichen, und ob sich hinter dem Fahrzeug in der Fahrzeugzwischengasse oder außerhalb der Fahrzeugzwischengasse ein Motorrad befindet. Der Optimierungsalgorithmus ist dabei derart gestaltet, dass potenzielle Solltrajektorien, die keine starke Bremsung erfordern, gegenüber potentiellen Solltrajektorien, die eine starke Bremsung erfordern, priorisiert werden, wenn hinter dem Fahrzeug ein sich außerhalb der Fahrzeugzwischengasse befindendes Motorrad detektiert worden ist. Eine Bremsung gilt dabei als starke Bremsung gilt, wenn eine durch die Bremsung erzielte Verzögerung des Fahrzeugs einen vorgegebenen Verzögerungswert übersteigt.

In einer vorteilhaften Weiterbildung des Verfahrens wird der vorgegebene Verzögerungswert in Abhängigkeit einer Fahrgeschwindigkeit des Fahrzeugs, in Abhängigkeit eines Abstands zwischen dem Fahrzeug und dem Motorrad und in Abhängigkeit einer vorgegebenen Reaktionszeit bestimmt, insbesondere derart, dass einem Fahrer des Motorrads mindestens die vorgegebene Reaktionszeit von beispielsweise einer Sekunde bis zur Einleitung einer Notbremsung zur Verfügung steht, durch die er eine Kollision mit dem Fahrzeug vermeiden kann. Die Notbremsung wird mit einer vorgegebenen Verzögerung, beispielsweise mit 8 m/s² durchgeführt.

In einer vorteilhaften Weiterbildung ist der Optimierungsalgorithmus derart gestaltet, dass potentielle Solltrajektorien, die kein Ausweichen in Richtung der Fahrzeugzwischengasse erfordern und/oder die eine starke Bremsung erfordern, gegenüber potentiellen Solltrajektorien, die ein Ausweichen in Richtung der Fahrzeugzwischengasse erfordern, priorisiert werden, wenn sich das detektierte Motorrad hinter dem Fahrzeug in der Fahrzeugzwischengasse befindet oder wenn sich hinter dem Fahrzeug kein Motorrad befindet.

Die Erfindung wird nachfolgend anhand von Figuren näher beschrieben.

Dabei zeigen:
- Fig. 1: Eine erste Verkehrssituation auf einer zweispurigen Straße,
- Fig. 2: Eine zweite Verkehrssituation auf einer zweispurigen Straße,
- Fig. 3: Eine dritte Verkehrssituation auf einer zweispurigen Straße.

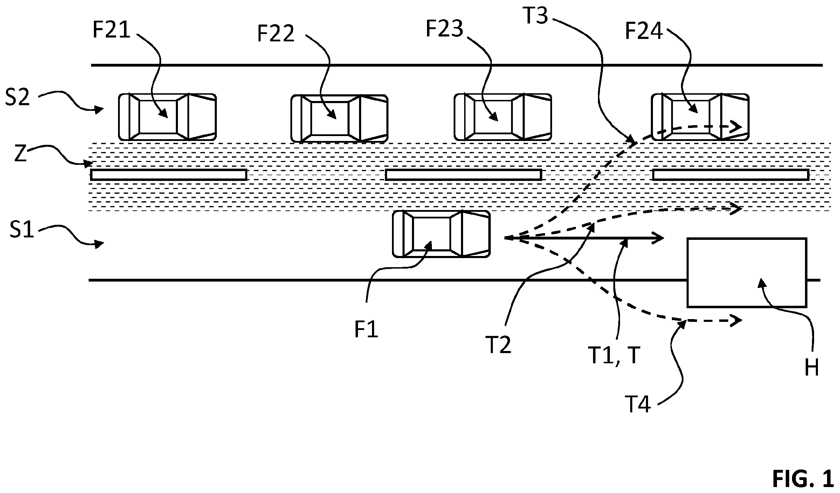

Figur 1 zeigt eine Verkehrssituation auf einer zweispurigen Straße mit einer Fahrspur S1, auf der ein Fahrzeug F1 fährt, mit einer zur Fahrspur S1 benachbarten Nachbarspur S2, auf der mehrere, eine Fahrzeugkolonne bildende, Fahrzeuge F21, F22, F23, F24 fahren.

Zwischen dem Fahrzeug F1 und der Fahrzeugkolonne F21, F22, F23, F24 befindet sich eine Fahrzeugzwischengasse Z, die ausreichend breit ist, um einem Motorrad ein Vorbeifahren zu ermöglichen. Von einer ausreichenden Breite der Fahrzeugzwischengasse Z kann man insbesondere dann ausgehen, wenn die Breite eine vorgegebene Mindestbreite, beispielsweise eine Mindestbreite von 1,5 m, übersteigt.

Bei der der gezeigten Verkehrssituation handelt es sich insbesondere um eine Stausituation, bei der der Verkehr mit einer begrenzten Geschwindigkeit von beispielsweise weniger als 60 km/h fließt. In einer solchen Verkehrssituation ist damit zu rechnen, dass Motorradfahrer die Fahrzeugzwischengasse Z benutzen, um das Fahrzeug F1 zu überholen.

Das Fahrzeug F1 ist mit einem System zur automatischen Fahrzeugführung ausgestattet. Dieses System weist eine Umgebungserfassungseinheit auf, mit der es die Verkehrssituation erfasst. Insbesondere erfasst die Umgebungserfassungseinheit Spurbegrenzungen, andere Verkehrsteilnehmer und sonstige Objekte im Umfeld des Fahrzeugs F1. Die Umgebungserfassungseinheit ist eingerichtet, zu erkennen, ob ein Verkehrsteilnehmer ein Motorrad oder ein anderes Fahrzeug ist. Das Fahrzeug F1 erkennt somit mittels seiner Umgebungserfassungseinheit die Fahrzeuge F21, F22, F23, F24 auf der Nachbarspur S2, die Abstände zu diesen Fahrzeugen F21, F22, F23, F24 und die Geschwindigkeiten dieser Fahrzeuge F21, F22, F23, F24. Anhand der Geschwindigkeiten erkennt das Fahrzeug F1, dass eine Stausituation vorliegt, und anhand der Abstände erkennt es, dass zwischen dem Fahrzeug F1 und den Fahrzeugen F21, F22, F23, F24 auf der Nachbarspur S2, die Zwischenfahrgasse Z vorhanden ist. Das Fahrzeug F1 erkennt mittels der Umgebungserfassungseinheit auch ein plötzlich vor ihm in seiner Fahrspur S1 auftauchendes stehendes Hindernis H. Das Hindernis H kann dabei ein echtes Hindernis sein, das sich tatsächlich vor dem Fahrzeug F1 befindet, es kann sich hierbei aber auch um eine Falsch-Positiv-Detektion handeln, d. h. die Umgebungserfassungseinheit erkennt fälschlicherweise ein Hindernis, das an dem Ort tatsächlich nicht vorhanden ist.

Das System zur automatischen Fahrzeugführung plant in dieser Situation eine Solltrajektorie T, der das Fahrzeug F1 folgen soll. Die Solltrajektorie T enthält dabei Koordinaten eines Pfads, den das Fahrzeug F1 abfahren soll und Informationen über die Dynamik, mit der dieser Pfad abgefahren werden soll.

Die Planung erfolgt dabei mittels eines Optimierungsalgorithmus. Dabei ist vorgesehen, dass mehrere potenzielle Solltrajektorien T1, T2, T3, T4 bestimmt werden und dass aus der Menge der bestimmten potenziellen Solltrajektorien eine ausgewählt wird und als Solltrajektorie T der automatisierten Fahrzeugführung zugrunde gelegt wird. Die ausgewählte Solltrajektorie T ist die aus der Menge der potenziellen Solltrajektorien T1, T2, T3, T4 am höchsten priorisierte Trajektorie.

Die Auswahl erfolgt beispielsweise, wie aus der DE 102020108857 A1 bekannt, mittels einer Kostenfunktion. Das heißt, jeder potenziellen Solltrajektorie T1, T2, T3, T4 wird mittels einer vorgegebenen Kostenfunktion ein Kostenwert zugeordnet und die potenzielle Solltrajektorie T1, T2, T3, T4 mit dem geringsten Kostenwert wird als Solltrajektorie T ausgewählt.

Die Kostenfunktion wird dabei derart vorgegeben, dass den potenziellen Solltrajektorie T1, T2, T3, T4 umso höhere Kostenwerte zugeordnet werden, je weniger diese für eine automatisierte Fahrzeugführung geeignet ist. Bei der Eignung werden dabei Sicherheitsaspekte berücksichtigt, d. h. potenzielle Solltrajektorien, die zu einer Gefahrensituation führen, bspw. zu einem Verlassen der Straße oder zu einem hohen Kollisionsrisiko führen, werden mit hohen Kosten sanktioniert. Ebenso werden Komfortaspekte berücksichtigt, d.h. Solltrajektorien, die zu hohen, üblicherweise als unangenehm empfundenen Längs- und/oder Querbeschleunigungen führen, werden mit hohen Kostenwerten sanktioniert. Zudem werden auch Verkehrsvorschriften und Regelaspekte berücksichtigt, d. h. potenzielle Solltrajektorien, die zu einem Verstoß gegen Verkehrsvorschriften führen oder zu einer großen Abweichung von einer gewünschten Fahrgeschwindigkeit führen, werden ebenfalls mit hohen Kostenwerten sanktioniert. Die Zuweisung eines hohen Kostenwerts hat zur Folge, dass die jeweilige potenzielle Solltrajektorie von der Auswahl als Solltrajektorie ausgeschlossen wird.

In der Figur 1 sind der Einfachheit halber nur vier potenzielle Solltrajektorien T1, T2, T3, T4 dargestellt.

Eine erste potenzielle Solltrajektorie T1 führt das Fahrzeug F1 auf seiner Fahrspur S1 geradeaus weiter. Das Fahrzeug F1 wird dabei durch eine Bremsung in den Stillstand gebremst, um eine Kollision mit dem Hindernis H zu vermeiden.

Eine zweite potenzielle Solltrajektorie T2 führt das Fahrzeug F1 zwischen dem Hindernis H und den Fahrzeugen auf der Nachbarspur S2 am Hindernis H vorbei. Das Fahrzeug F1 weicht auf der zweiten potenziellen Solltrajektorie T2 dem Hindernis aus und dringt dabei in die Fahrzeugzwischengasse Z ein. Das Fahrzeug F1 kann dabei auch in die Nachbarspur S2 eindringen, das Eindringen ist aber auf den Bereich der Fahrzeugzwischengasse Z beschränkt. Das Fahrzeug F1 kann dabei auch verzögert werden, die Verzögerung fällt aber geringer aus als im Falle der ersten potenziellen Solltrajektorie T1.

Eine dritte potenzielle Solltrajektorie T3 führt das Fahrzeug F1 über die Fahrzeugzwischengasse Z hinaus auf die Nachbarspur S1.

Eine vierte potentielle Solltrajektorie T4 führt das Fahrzeug von der Straße weg.

Die vierte potenzielle Solltrajektorie T4 ist für die automatisierte Fahrzeugführung ungeeignet, weil sie das Fahrzeug F1 von der Straße wegführt. Sie wird von der der Auswahl als Solltrajektorie T ausgeschlossen.

Die dritte potenzielle Solltrajektorie T3 ist für die automatisierte Fahrzeugführung ebenfalls ungeeignet, weil sie das Fahrzeug F1 in die Nachbarspur S2 führt, obwohl dort keine geeignete Einscherlücke vorhanden ist. Sie wird wegen der hohen Kollisionsgefahr ebenfalls von der Auswahl als Solltrajektorie T ausgeschlossen.

Die erste potenzielle Solltrajektorie T1 und die zweite potenzielle Solltrajektorie T2 sind für die automatisierte Fahrzeugführung geeignet und müssen gegeneinander priorisiert werden, um die am besten geeignete potenzielle Solltrajektorie als Solltrajektorie T auszuwählen.

Die Priorisierung erfolgt mit dem Optimierungsalgorithmus. Dieser ist derart gestaltet, dass in einem solchen Fall die erste potenzielle Solltrajektorie T1 gegenüber der zweiten potenziellen Solltrajektorie T2 priorisiert wird, d. h. die erste potenzielle Solltrajektorie T1 als Solltrajektorie T gewählt wird. Diese Priorisierung bzw. Auswahl erfolgt dann, wenn mittels der Umgebungserfassungseinheit hinter dem Fahrzeug F1 kein anderes Fahrzeug in der Fahrspur S1 des Fahrzeugs F1 und auch kein Motorrad in der Fahrspur S1 des Fahrzeugs F1 oder der Fahrzeugzwischengasse Z erkannt wird. Dies gilt jedoch nur solange, solange das Fahrzeug F1 eine Kollision mit dem Hindernis H durch eine Vollbremsung vermeiden kann. Unter einer Vollbremsung wird dabei eine Bremsung mit einer vorgegebenen maximalen Verzögerung, bspw. eine Bremsung mit einer Verzögerung von 10 m/s² verstanden. Andernfalls, wenn die Kollision durch eine derartige Bremsung nicht mehr vermeidbar ist, wird die zweite potenzielle Solltrajektorie T2 gegenüber der ersten potenziellen Solltrajektorie T1 priorisiert, d.h. die zweite potenzielle Solltrajektorie T2 wird dann als Solltrajektorie T ausgewählt.

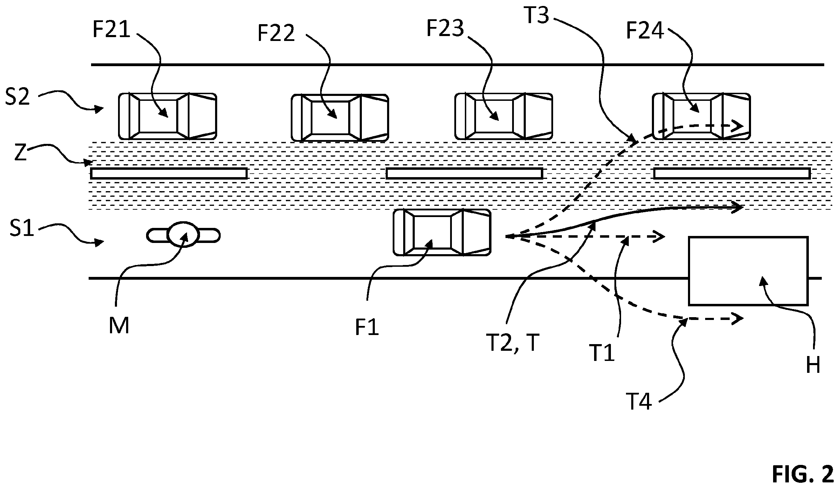

Figur 2 zeigt die gleiche Verkehrssituation wie Figur 1, wobei sich hinter dem Fahrzeug F1 zusätzlich ein Motorrad M in der Fahrspur S1 aber außerhalb der Fahrzeugzwischengasse Z befindet. Die Umgebungserfassungseinheit des Fahrzeugs F1 erkennt das Motorrad M.

Der Optimierungsalgorithmus ist derart gestaltet, dass in diesem Fall die zweite potenzielle Solltrajektorie T2 gegenüber der ersten potenziellen Solltrajektorie T1 priorisiert wird, d. h. die zweite potenzielle Solltrajektorie S2 wird als Solltrajektorie T ausgewählt. Dies gilt jedoch nur dann, wenn das Fahrzeug F1 auf der ersten potenziellen Solltrajektorie T1 zur Vermeidung einer Kollision mit dem Hindernis H stark gebremst werden muss. Andernfalls, wenn das Fahrzeug F1 auf der ersten potenziellen Solltrajektorie T1 zur Vermeidung einer Kollision mit dem Hindernis H nicht stark gebremst werden muss, wird die erste potenzielle Solltrajektorie T1 gegenüber der zweiten potenziellen Solltrajektorie priorisiert.

Unter einer starken Bremsung wird dabei eine Bremsung mit einer Verzögerung verstanden, die größer als ein vorgegebener Verzögerungswert ist. Der vorgegebene Verzögerungswert ist dabei ein Wert, der situationsabhängig vorgegeben wird, insbesondere in Abhängigkeit der Fahrgeschwindigkeit des Fahrzeugs F1, in Abhängigkeit des Abstands des Motorrads M zum Fahrzeug F1 und in Abhängigkeit einer vorgegebenen Reaktionszeit. Die vorgegebene Reaktionszeit beträgt beispielsweise eine Sekunde. Der vorgegebene Verzögerungswert wird insbesondere derart bestimmt, dass einem Fahrer des Motorrads M dann, wenn das Fahrzeug F1 mit dem vorgegebenen Verzögerungswert gebremst wird, mindestens die vorgegebene Reaktionszeit zur Verfügung steht, um eine Notbremsung einzuleiten, durch die der Fahrer des Motorrads M eine Kollision mit dem Fahrzeug F1 vermeiden kann. Dabei wird angenommen, dass das Motorrad die Notbremsung mit einer vorgegebenen Verzögerung, beispielsweise mit 8 m/s² durchführt.

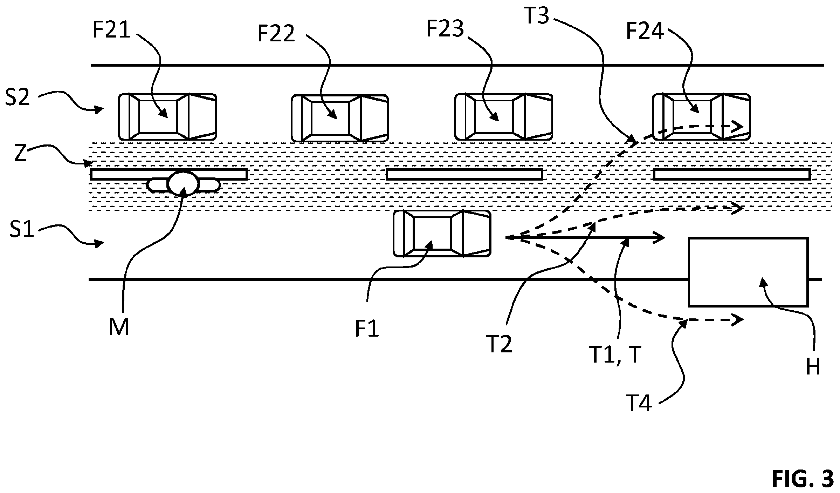

Figur 3 zeigt die gleiche Verkehrssituation wie Figur 1, wobei sich hinter dem Fahrzeug F1 zusätzlich ein Motorrad M innerhalb der Fahrzeugzwischengasse Z befindet. Die Umgebungserfassungseinheit des Fahrzeugs F1 erkennt das in der Fahrzeugzwischengasse Z fahrende Motorrad M.

Der Optimierungsalgorithmus ist derart gestaltet, dass in diesem Fall die erste potenzielle Solltrajektorie T1 gegenüber der zweiten potenziellen Solltrajektorie T2 priorisiert wird, d. h. die erste potentielle Solltrajektorie T1 wird als Solltrajektorie T ausgewählt. Dies gilt insbesondere dann, wenn das Fahrzeug F1 auf der ersten potenziellen Solltrajektorie T1 eine Kollision mit dem Hindernis H durch eine Vollbremsung vermeiden kann. Andernfalls, wenn das Fahrzeug F1 auf der ersten potenziellen Solltrajektorie T1 eine Kollision mit dem Hindernis H durch eine Vollbremsung nicht mehr vermeiden kann, wird die zweite potenzielle Solltrajektorie T2 gegenüber der ersten potenziellen Solltrajektorie T1 priorisiert.

## Patentansprüche

1. Verfahren zum Planen einer Solltrajektorie (T) für ein automatisiert fahrendes Fahrzeug (F1),
- wobei die Solltrajektorie (T) Koordinaten eines Pfads enthält, den das Fahrzeug (F1) abfahren soll und Informationen über die Dynamik enthält, mit der der Pfad abgefahren werden soll,
- wobei eine aktuelle Umgebungssituation mittels einer Umgebungserfassungseinheit des Fahrzeugs (F1) erfasst wird und
- wobei das Planen mittels eines Optimierungsalgorithmus erfolgt, mit dem mehrere potenzielle Solltrajektorien (T1, T2, T3, T4) in Abhängigkeit der aktuellen Umgebungssituation gegeneinander priorisiert werden und mit dem die am höchsten priorisierte potentielle Solltrajektorie (T1, T2, T3, T4) als Solltrajektorie (T) auswählt wird,
**dadurch gekennzeichnet,**
- **dass** mittels der Umgebungserfassungseinheit detektiert wird,
- ob sich auf einer Nachbarspur (S2) des Fahrzeugs (F1) eine Fahrzeugkolonne (F21, F22, F23, F24) befindet,
- ob sich zwischen dem Fahrzeug (F1) und der Fahrzeugkolonne (F21, F22, F23, F24) eine Fahrzeugzwischengasse (Z) befindet, die ausreichend breit ist, um einem Motorrad ein Vorbeifahren zu ermöglichen, und
- ob sich hinter dem Fahrzeug (F1) in der Fahrzeugzwischengasse (Z) oder auf einer Fahrspur (S1) des Fahrzeugs (F1) außerhalb der Fahrzeugzwischengasse (Z) ein Motorrad (M) befindet,
- und **dass** der Optimierungsalgorithmus derart gestaltet ist,
- **dass** potenzielle Solltrajektorien (T1, T2, T3, T4), die keine starke Bremsung erfordern, gegenüber potentiellen Solltrajektorien (T1, T2, T3, T4), die eine starke Bremsung erfordern, priorisiert werden, wenn sich das detektierte Motorrad (M) hinter dem Fahrzeug (F1) außerhalb der Fahrzeugzwischengasse (Z) befindet, wobei eine Bremsung als starke Bremsung gilt, wenn eine durch die Bremsung erzielte Verzögerung des Fahrzeugs (F1) einen vorgegebenen Verzögerungswert übersteigt.

2. Verfahren nach Anspruch 1,
**dadurch gekennzeichnet, dass**
der vorgegebene Verzögerungswert in Abhängigkeit von einer Fahrgeschwindigkeit des Fahrzeugs (F1), eines Abstands zwischen dem Fahrzeug (F1) und dem Motorrad (M) und einer vorgegebenen Reaktionszeit bestimmt wird.

3. Verfahren nach Anspruch 2,
**dadurch gekennzeichnet, dass**
der vorgegebene Verzögerungswert derart bestimmt wird, dass einem Fahrer des Motorrads (M) mindestens die vorgegebene Reaktionszeit zur Verfügung steht, um eine kollisionsvermeidende Notbremsung einzuleiten.

4. Verfahren nach Anspruch 3,
**dadurch gekennzeichnet, dass**
die Notbremsung mit einer vorgegebenen Verzögerung durchgeführt wird.

5. Verfahren nach einem der vorhergehenden Ansprüche,
**dadurch gekennzeichnet, dass**
der Optimierungsalgorithmus derart gestaltet ist, dass potenzielle Solltrajektorien (T1, T2, T3, T4), die kein Ausweichen in Richtung der Fahrzeugzwischengasse (Z) erfordern und/oder die eine starke Bremsung erfordern, gegenüber potenziellen Solltrajektorien (T1, T2, T3, T4), die ein Ausweichen in Richtung der Fahrzeugzwischengasse (Z) erfordern, priorisiert werden, wenn sich das detektierte Motorrad (M) hinter dem Fahrzeug (F1) in der Fahrzeugzwischengasse (Z) befindet.

6. Verfahren nach einem der vorhergehenden Ansprüche,
**dadurch gekennzeichnet, dass**
der Optimierungsalgorithmus derart gestaltet ist, dass potenzielle Solltrajektorien (T1, T2, T3, T4), die kein Ausweichen in Richtung der Fahrzeugzwischengasse (Z) erfordern und/oder die eine starke Bremsung erfordern, gegenüber potenziellen Solltrajektorien(T1, T2, T3, T4), die ein Ausweichen in Richtung der Fahrzeugzwischengasse (Z) erfordern, priorisiert werden, wenn sich hinter dem Fahrzeug (F1) kein Motorrad befindet.

## Claims

1. Method for planning a target trajectory (T) for an automatedly driving vehicle (F1),
- the target trajectory (T) containing coordinates of a route on which the vehicle (F1) is intended to drive and containing information about the dynamics with which the route is to be driven,
- a current environment situation being detected by means of an environment detection unit of the vehicle (F1) and
- the planning being carried out by means of an optimization algorithm, using which a plurality of potential target trajectories (T1, T2, T3, T4) are prioritized against each other depending on the current environment situation, and using which the highest prioritized potential target trajectory (T1, T2, T3, T4) is selected as the target trajectory (T),
**characterized in that**
- the environment detection unit detects
- whether there is a line of vehicles (F21, F22, F23, F24) in an adjacent lane (S2) to the vehicle (F1),
- whether there is an inter-vehicle gap (Z) between the vehicle (F1) and the line of vehicles (F21, F22, F23, F24), which is sufficiently wide to allow a motorcycle to overtake, and
- whether there is a motorcycle (M) behind the vehicle (F1) in the inter-vehicle gap (Z) or in a lane (S1) of the vehicle (F1) outside the inter-vehicle gap (Z),
- **and in that** the optimization algorithm is designed such that
- potential target trajectories (T1, T2, T3, T4) which do not require heavy braking are prioritized over potential target trajectories (T1, T2, T3, T4) which require heavy braking when the detected motorcycle (M) is located behind the vehicle (F1) outside the inter-vehicle gap (Z), braking being considered heavy braking if a deceleration of the vehicle (F1) achieved by the braking exceeds a predetermined deceleration value.

2. Method according to claim 1,
**characterized in that**
the predetermined deceleration value is determined depending on a driving speed of the vehicle (F1), on a distance between the vehicle (F1) and the motorcycle (M) and on a predetermined reaction time.

3. Method according to claim 2,
**characterized in that**
the predetermined deceleration value is determined such that a driver of the motorcycle (M) has at least the predetermined reaction time available to initiate an emergency braking maneuver in order to avoid a collision.

4. Method according to claim 3,
**characterized in that**
the emergency braking is carried out using a predetermined deceleration.

5. Method according to any of the preceding claims,
**characterized in that**
the optimization algorithm is designed such that potential target trajectories (T1, T2, T3, T4) which do not require swerving toward the inter-vehicle gap (Z) and/or which require heavy braking are prioritized over potential target trajectories (T1, T2, T3, T4) which require swerving toward the inter-vehicle gap (Z) when the detected motorcycle (M) is behind the vehicle (F1) in the inter-vehicle gap (Z).

6. Method according to any of the preceding claims,
**characterized in that**
the optimization algorithm is designed such that potential target trajectories (T1, T2, T3, T4) which do not require swerving toward the inter-vehicle gap (Z) and/or which require heavy braking are prioritized over potential target trajectories (T1, T2, T3, T4) which require swerving toward the inter-vehicle gap (Z) when there is no motorcycle behind the vehicle (F1).

## Revendications

1. Procédé pour la planification d'une trajectoire de consigne (T) pour un véhicule (F1) à conduite automatisée,
- dans lequel la trajectoire de consigne (T) contient des coordonnées d'un trajet que le véhicule (F1) doit suivre et contient des informations concernant la dynamique avec laquelle le trajet doit être suivi,
- dans lequel une situation de zone environnante actuelle est détectée au moyen d'une unité de détection de zone environnante du véhicule (F1), et
- dans lequel la planification est effectuée au moyen d'un algorithme d'optimisation avec lequel plusieurs trajectoires de consigne potentielles (T1, T2, T3, T4) sont priorisées les unes par rapport aux autres en fonction de la situation de zone environnante actuelle et avec lequel la trajectoire de consigne potentielle (T1, T2, T3, T4) la plus prioritaire est sélectionnée comme trajectoire de consigne (T),
**caractérisé en ce**
- **qu'**on détecte, au moyen de l'unité de détection de zone environnante,
- si une file de véhicules (F21, F22, F23, F24) se trouve sur une voie voisine (S2) du véhicule (F1),
- si une voie de circulation inter-files (Z) se trouve entre le véhicule (F1) et la file de véhicules (F21, F22, F23, F24), laquelle voie de circulation inter-files est suffisamment large pour permettre à une moto de passer, et
- si une moto (M) se trouve derrière le véhicule (F1) dans la voie de circulation inter-files (Z) ou sur une voie de circulation (S1) du véhicule (F1) en dehors de la voie de circulation inter-files (Z),
- et **que** l'algorithme d'optimisation est configuré de telle sorte
- **que** des trajectoires de consigne potentielles (T1, T2, T3, T4) qui ne nécessitent pas un freinage important sont priorisées par rapport à des trajectoires de consigne potentielles (T1, T2, T3, T4) qui nécessitent un freinage important lorsque la moto (M) détectée se trouve derrière le véhicule (F1) en dehors de la voie de circulation inter-files (Z), dans lequel un freinage est considéré comme un freinage important lorsqu'une décélération du véhicule (F1) obtenue par le freinage dépasse une valeur de décélération prédéfinie.

2. Procédé selon la revendication 1,
**caractérisé en ce que**
la valeur de décélération prédéfinie est déterminée en fonction d'une vitesse de circulation du véhicule (F1), d'une distance entre le véhicule (F1) et la moto (M) et d'un temps de réaction prédéfini.

3. Procédé selon la revendication 2,
**caractérisé en ce que**
la valeur de décélération prédéfinie est déterminée de telle sorte qu'un conducteur de la moto (M) dispose au moins du temps de réaction prédéfini pour déclencher un freinage d'urgence évitant une collision.

4. Procédé selon la revendication 3,
**caractérisé en ce que**
le freinage d'urgence est mis en œuvre avec une décélération prédéfinie.

5. Procédé selon l'une des revendications précédentes,
**caractérisé en ce que**
l'algorithme d'optimisation est configuré de telle sorte que des trajectoires de consigne potentielles (T1, T2, T3, T4) qui ne nécessitent pas d'évitement en direction de la voie de circulation inter-files (Z) et/ou qui nécessitent un freinage important sont priorisées par rapport à des trajectoires de consigne potentielles (T1, T2, T3, T4) qui nécessitent un évitement en direction de la voie de circulation inter-files (Z) lorsque la moto (M) détectée se trouve derrière le véhicule (F1) dans la voie de circulation inter-files (Z).

6. Procédé selon l'une des revendications précédentes,
**caractérisé en ce que**
l'algorithme d'optimisation est configuré de telle sorte que des trajectoires de consigne potentielles (T1, T2, T3, T4) qui ne nécessitent pas d'évitement en direction de la voie de circulation inter-files (Z) et/ou qui nécessitent un freinage important sont priorisées par rapport à des trajectoires de consigne potentielles (T1, T2, T3, T4) qui nécessitent un évitement en direction de la voie de circulation inter-files (Z) lorsqu'aucune moto ne se trouve derrière le véhicule (F1).
